# EUROPEAN PATENT SPECIFICATION

(11) **EP 1 818 144 B1**
(45) Date of publication and mention of the grant of the patent: **26.09.2012**
(21) Application number: 07109067.4
(22) Date of filing: 24.04.2006
(51) Int. Cl.: B27B 5/29, B23D 45/04

(54) **Bevel lock assembly for miter saws**
Gehrungswinkelarretierung für Gehrungssäge
Arrêt d'angle de biseau pour scie à onglet

(30) Priority: 29.04.2005 US 676037 P
(43) Date of publication of application: 15.08.2007
(62) Divisional of application: 06113000.1
(73) Proprietor: Black & Decker, Inc., Newark, DE 19711 (US)
(72) Inventor: Kaye, Thomas R. Jr., Bel Air, WI 21014 (US); Oktavec, Craig A, Forest Hill Maryland 21050 (US); Meredith, Daryl S, Hampstead, MD 21074 (US); Vogel, Stephanie L, York, PA 17403 (US); Brendel, Lee M, Bel Air, MD 21014 (US); Wattenbach, Brian P, Menomonee Falls, WI 53051 (US)
(74) Representative: Bell, Ian Stephen

(56) References cited:
- EP-A- 0 857 550
- EP-A- 1 632 323
- EP-A- 1 632 324
- FR-A- 1 135 035
- US-A1- 2004 089 125
- US-A1- 2004 112 190

## Description

This application derives priority from US Application No. 60/676,037, filed April 29, 2005.

This invention relates to a miter saw comprising a bevel lock assembly according to the preamble of claim 1. Such a saw is known from US 2004/0089125 A1.

Typical miter saws have a base assembly, a table that is rotatable relative to the base assembly, and a saw assembly including a motor and a blade driven by the motor. The saw assembly may be pivotally attached to the table in order to allow for inclined cuts relative to the top surface of the table.

It is an object of the invention to provide a bevel lock assembly for such miter saws.

United States Patent Application Publication No. US 2004/0112190 A1 discloses a compound miter saw having a bevel angle locking actuator for locking the bevel angle of the saw blade. The bevel angle locking actuator is mounted forward of the rear of the saw on a saw support assembly, which is in turn rotatably mounted to the saw's base assembly. The locking actuator utilizes particular wedging cam surfaces to lock the bevel angle of the saw blade.

In accordance with the present invention, an miter saw according to Claim 1 is employed. Further preferred embodiments are defined by the features of claims 2-9.

Additional features and benefits of the present invention are described, and will be apparent from, the accompanying drawings and the detailed description below.

The accompanying drawings illustrate preferred embodiments of the invention according to the practical application of the principles thereof, and in which:
FIG. 1 is a side view of the miter saw according to the invention;
FIG. 2 is a partial cross-sectional side view of a bevel lock assembly not forming part of the invention;
FIG. 3 illustrates a second bevel lock assembly not forming part of the invention, where FIG. 3A is a partial cross-sectional side view and FIG. 3B is a partial cross-sectional view along line III-III of FIG. 3A;
FIG. 4 is a side view of a first embodiment of a bevel stop assembly according to the invention;
FIG. 5 is a partial exploded view of the first embodiment of the bevel stop assembly;
FIG. 6 is a partial cross-sectional side view of the second embodiment of a bevel stop assembly according to the invention;
FIG. 7 is a partial exploded view of the second embodiment of the bevel stop assembly;
FIG. 8 illustrates a third embodiment of a bevel stop assembly according to the invention, where FIGS. 8A-8B are a partial front view and a cross-sectional view along line VIII-VIII of FIG. 8A, respectively; and
FIG. 9 illustrates a fourth embodiment of a bevel stop assembly according to the invention, where FIGS. 9A-9B are a partial front view and a cross-sectional view along line IX-IX of FIG. 9A, respectively.

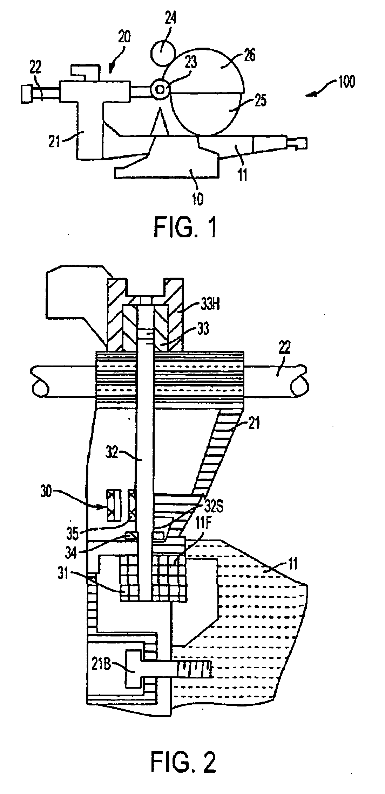

The invention is now described with reference to the accompanying figures, wherein like numerals designate like parts. Referring to FIG. 1 not forming part of the invention, a miter saw 100 may include a base assembly 10, a table assembly 11 supported by base assembly 10, and a saw assembly 20 supported by the table assembly 11. Saw assembly 20 may include a support housing 21 rotatably connected to the table assembly 11, at least one rail 22 slidably connected to the support housing 21, a pivotable arm 23 pivotably attached to trunnion 21, a motor 24 supported by the arm 23 and driving a blade 25. Arm 23 may also support an upper blade guard 26, which preferably covers an upper part of blade 25. A lower blade guard (not shown) may be pivotally attached to upper blade guard 26 to cover a lower part of blade 25.

Persons skilled in the art will recognize that miter saw 100 as shown is a slide miter saw. However, miter saw 100 may be a non-sliding miter saw by changing the elements in saw assembly 20, as is well known in the art.

Referring to FIG. 2, support housing 21 may be held in place against table assembly 11 via a bolt 21 B. Support housing 21 preferably carries bevel lock assembly 30. Bevel lock assembly 30 preferably includes a body 31 contacting a flange 11 F of table 11. A rod 32 may be threadingly engaged to body 31. Rod 32 preferably extends through support housing 21 until it exits through the top of support housing 21. A handle 33H may be attached to rod 32.

Alternatively, rod 32 may be captured at one end by body 31, and threadingly engaged to a nut 33, which is attached to handle 33H. Persons skilled in the art will recognize that nut 33 can be a hex adapter to allow repositioning in the event of wear. Accordingly, by rotating handle 33H, body 31 is moved upwardly into locking contact with flange 11 F.

In order to maintain the proper alignment of rod 32, it may be preferable to provide a clamp 35 that pushes rod 32 into sliding contact with support housing 21.

Rod 32 may extend through a washer 34 disposed on a rib of support housing 21. Rod 32 may have a shoulder 32S contacting washer 34 in order to distribute the clamping force unto support housing 21.

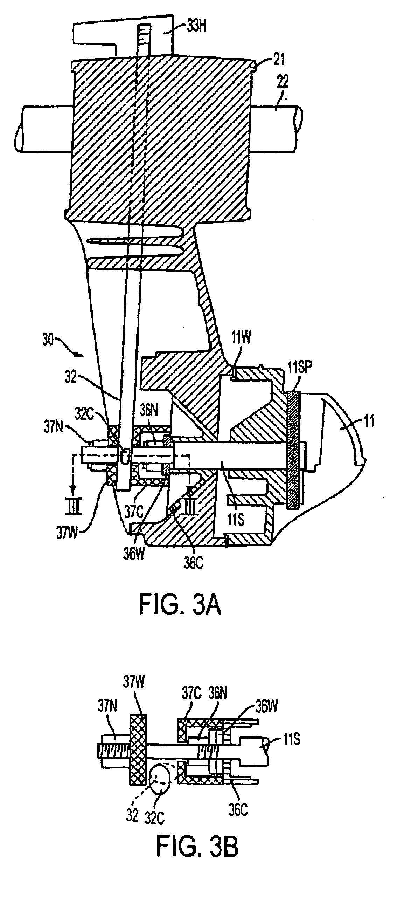

FIG. 3 illustrates a second embodiment of bevel lock assembly 30 not forming part of the invention, where like numerals refer to like parts. The teachings of the previous embodiment are hereby incorporated by reference.

In this embodiment, a shaft 11S may be fixedly attached to table 11 via a pin 11SP. Shaft 11S passes through support housing 21. Support housing 21 preferably receives a cone 36C. Cone 36C is preferably made of powdered metal.

Washer(s) 36W may be disposed on shaft 11S against cone 36C. A nut 36N may threadingly engage shaft 11S, sandwiching washer(s) 36W between nut 36N and cone 36C. Persons skilled in the art will recognize that nut 36N will preferably prevent support housing 21 to separate from table 11.

A cupped washer 37C may also be disposed on shaft 11 S and around nut 36N, contacting cone 36C. Rod 32 may be disposed adjacent and/or against washer 37C. A washer 37W is preferably disposed on shaft 11S, sandwiching rod 32 between washers 37C, 37W. A nut 37N is preferably threadingly engaged to shaft 11S, maintaining washer 37C on shaft 11S.

With such arrangement, a user can rotate handle 33H, causing a cam 32C to contact washer 37, pushing cone 36C (and thus support housing 21) into locking contact with table 11. Persons skilled in the art will recognize that such arrangement preferably removes all play between support housing 21 and table 11.

Preferably a washer 11W is disposed between table 11 and support housing 21. Washer 11W is preferably made of brass so that table 11 and support 21 (both of which may be made of aluminum) do not contact directly, thus preventing a lock up. Such washer 11W may also reduce the need for grease, so as to improve the locking function.

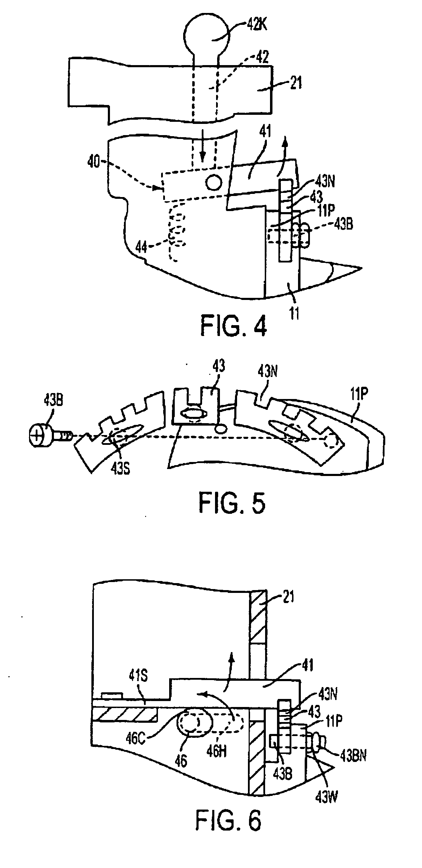

Referring to FIGS. 4-5, according to the invention the miter saw 100 is provided with a bevel stop mechanism 40. Bevel stop mechanism 40 includes a member 41 which may be pivotably attached to support housing 21. Member 41 may engage notches 43N disposed on at least one plate 43 (and preferably three plates 43) at predetermined angular bevel positions.

Plate(s) 43 may be attached to a flange 11P of table 11 via bolt(s) 43B threadingly engaging flange 11P. Plate(s) 43 may have slot(s) 43S allowing for adjustment of plate(s) 43 prior to tightening of bolt(s) 43B. Such adjustability allows the user to fine tune the predetermined bevel positions.

Persons skilled in the art will recognize that it is preferable to have multiple adjustable plates 43 so that different bevel angles may be adjusted separately. For example, the plate 43 containing the zero degree angle notch 43N can be adjusted separately without affecting the plate containing the 45 degree angle notch 43N so long as each angle notch is disposed on a different plate 43.

Rod 42 may be connected to member 41. Rod 42 may have a knob 42K. With such arrangement, the user may push down on knob 42K, moving rod 42 downwardly, causing member 41 to move from a first position engaging notch 43N into a second position bypassing notch 43N. The user can then change the angular bevel position of support housing 21 (and thus of saw assembly 20).

A spring 44 may be disposed in support housing 21 to bias member 41 towards the first position.

Persons skilled in the art will recognize that rod 42 may be integrally formed with member 41. In such case, member 41 need not be pivotally attached to support housing 21, allowing the user to jointly move rod 42 and member 41 between the first and second positions.

FIGS. 6-7 illustrate a second embodiment of bevel stop assembly 40 according to the invention, where like numerals refer to like parts. The teachings of the previous embodiment are hereby incorporated by reference.

There are three main differences between the first and second embodiments. First, member 41 may be disposed on a spring plate 41S which is preferably bolted or affixed to support housing 21. Spring plate 41S preferably biases member 41 towards the first position engaging notch 43N.

Second, cam assembly 46 may be used to move member 41 between the first and second positions, rather than rod 42. Cam assembly 46 may have a cam 46C disposed underneath member 41. Cam 46C may be connected to a handle 46H disposed outside of support housing 21. Accordingly, a user would preferably rotate handle 46H, causing cam 46C to rotate, lifting member 41 out of engagement with notch 43N. Persons skilled in the art will recognize that cam 46C is preferably connected to two handles 46H, each handle disposed on each side of support housing 21.

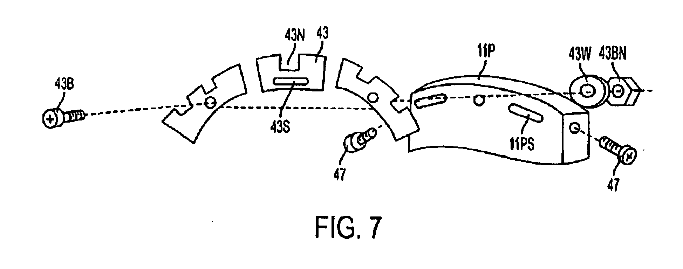

Third, like in the previous embodiment, at least one plate 43 may have a slot 43S to provide for adjustability of the notch(es) 43N. Some plate(s) 43 may have instead a hole, while flange 11P may have a slot 11 PS. As shown in FIG. 7, bolt 43B may be inserted through plate 43, through slot 11PS (and thus through flange 11P), through a washer 43N and threadingly engage nut 43BN. Persons skilled in the art will recognize that such plate 43 can be adjusted by moving bolt 43B along slot 11PS. Such adjustment may be made by rotating screw 47, which preferably threadingly engages flange 11P and contacts bolt 43B, pushing bolt 43B along slot 11PS.

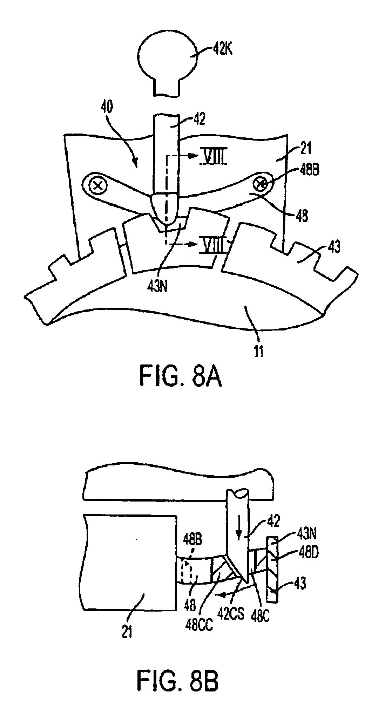

FIG. 8 illustrates a third embodiment of bevel stop assembly 40 according to the invention, where like numerals refer to like parts. The teachings of the previous embodiments are hereby incorporated by reference.

The main difference between the previous embodiments is that a member 48 has a detent 48D engaging detent notch 43N. Member 48 is preferably affixed to support housing 21 via bolts 48B. Detent 48D preferably snuggly engages detent notch 43N.

Member 48 may have a channel 48C which receives rod 42 therethrough. Member 48 may have a cam portion 48CC which contacts a cam surface 42CS on rod 42. With such arrangement, the user can move knob 42K (and thus rod 42) downwardly. As cam surface 42CS contacts portion 48CC, portion 48CC (and thus detent 48D) moves towards support housing 21, thus disengaging detent notch 43N.

Persons skilled in the art will recognize that it is desirable that portions of member 48 be made of a resilient material, such as spring steel, in order to bias detent 48D towards the first position, i.e., engaging detent notch 43N.

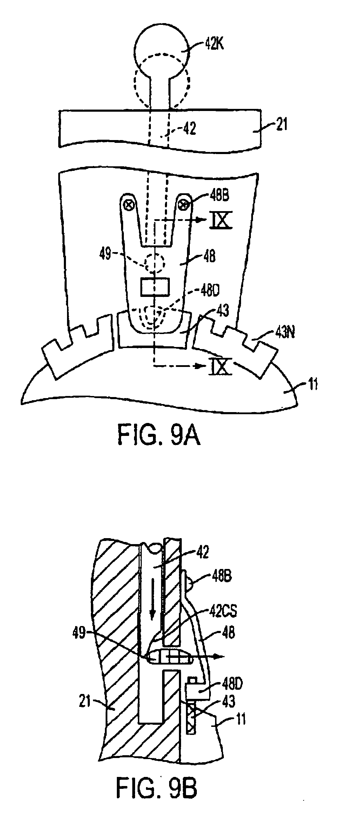

FIG. 9 illustrates a fourth embodiment of bevel stop assembly 40 according to the invention, where like numerals refer to like parts. The teachings of the previous embodiments are hereby incorporated by reference.

The main difference between the previous embodiments is that detent 48D engaging detent notch 43N from the front. A link 49 can be moved towards member 48 when the user moves knob 42K (and thus rod 42) downwardly. As cam surface 42CS contacts link 49, link 49 contacts member 48 and moves member 48 (and thus detent 48D) away from support housing 21, thus disengaging detent notch 43N.

## Claims

1. A miter saw (100) comprising:
a base assembly (10);
a rotatable table (11) rotatably disposed on the base assembly;
a saw assembly (20) rotatably supported by the table (11), the saw assembly comprising a support housing (21) rotatably connected to the table, a pivotable arm (23) supported by the support housing, a motor (24) supported by the arm and a blade (25) driven by the motor; and
a bevel stop assembly (40) for fixing the rotational position of the saw assembly relative to the table, the bevel stop assembly comprising a handle (42K,46H) disposed on the support housing, a member (41,48) being movable by the handle **characterized by** a first plate (43) disposed on the table, the first plate having a first notch (43N) for receiving the member, wherein the member is movable by the handle between a first position engaging the first notch, and a second position not engaging the first notch.

2. The miter saw of Claim 1, wherein the first plate (43) is adjustable relative to the table (11).

3. The miter saw of Claim 1, wherein the bevel stop assembly (40) further comprises a spring (41S,44) for biasing the member (41) towards the first position.

4. The miter saw of Claim 1, wherein the handle (42K) is disposed on top of the support housing (21).

5. The miter saw of Claim 1, wherein the bevel stop assembly (40) further comprises a rod (42) that is connected to the handle (42K), wherein the rod contacts and moves the member (41) towards the second position when the handle is moved.

6. The miter saw of Claim 1, wherein the bevel stop assembly (40) further comprises a cam (42CS,46C) that is connected to the handle (42K,46H), wherein the cam contacts and moves the member (41,48) towards the second position when the handle is moved.

7. The miter saw of Claim 1, wherein the bevel stop assembly (40) further comprises a link (49) that is connected to the handle (42K), wherein the link contacts and moves the member (48) towards the second position when the handle is moved.

8. The miter saw of Claim 1, wherein the member (41) is attached to a spring (41S,44), which is attached to the support housing (21).

9. The miter saw of Claim 1, wherein the bevel stop assembly (40) further comprises a second plate (43) disposed on the table (11), the second plate having a second notch (43N) for receiving the member (41,48).

## Patentansprüche

1. Gehrungssäge (100), umfassend:
eine Basisanordnung (10);
einen drehbaren Tisch (11), der drehbar auf der Basisanordnung angebracht ist;
eine Sägeanordnung (20), die drehbar vom Tisch (11) gestützt wird, wobei die Sägeanordnung ein Stützgehäuse (21) umfasst, das drehbar mit dem Tisch verbunden ist, einen schwenkbaren Arm (23), der vom Stützgehäuse gestützt wird, einen Motor (24), der vom Arm gestützt wird, und eine Klinge (25), die vom Motor angetrieben wird; und
eine Gehrungswinkelanschlaganordnung (40) zur Befestigung der Drehposition der Sägeanordnung mit Bezug auf den Tisch, wobei die Gehrungswinkelanschlaganordnung einen Griff (42K, 46H) umfasst, der auf dem Stützgehäuse angebracht ist, wobei ein Element (41, 48) durch den Griff bewegt werden kann, **gekennzeichnet durch** eine erste Platte (43), die auf dem Tisch angebracht ist, wobei die erste Platte eine erste Kerbe (43N) aufweist, um das Element aufzunehmen, wobei das Element **durch** den Griff zwischen einer ersten Position, die in die erste Kerbe eingreift, und einer zweiten Position, die nicht in die erster Kerbe eingreift, beweglich ist.

2. Gehrungssäge nach Anspruch 1, wobei die erste Platte (43) mit Bezug auf den Tisch (11) eingestellt werden kann.

3. Gehrungssäge nach Anspruch 1, wobei die Gehrungswinkelanschlaganordnung (40) weiter eine Feder (41 S, 44) umfasst, um das Element (41) in die erste Position zu lenken.

4. Gehrungssäge nach Anspruch 1, wobei der Griff (42K) auf der oberen Seite des Stützgehäuses (21) angebracht ist.

5. Gehrungssäge nach Anspruch 1, wobei die Gehrungswinkelanschlaganordnung (40) weiter eine Stange (42) umfasst, die mit dem Griff (42K) verbunden ist, wobei die Stange mit dem Element (41) in Kontakt kommt und es in die zweite Position bewegt, wenn der Griff bewegt wird.

6. Gehrungssäge nach Anspruch 1, wobei die Gehrungswinkelanschlaganordnung (40) weiter einen Nocken (42CS, 46C) umfasst, der mit dem Griff (42K, 46H) verbunden ist, wobei der Nocken mit dem Element (41, 48) in Kontakt kommt und es in die zweite Position bewegt, wenn der Griff bewegt wird.

7. Gehrungssäge nach Anspruch 1, wobei die Gehrungswinkelanschlaganordnung (40) weiter eine Verbindung (49) umfasst, die mit dem Griff (42K) verbunden ist, wobei die Verbindung mit dem Element (48) in Kontakt kommt und es in die zweite Position bewegt, wenn der Griff bewegt wird.

8. Gehrungssäge nach Anspruch 1, wobei das Element (41) an eine Feder (41 S, 44) befestigt ist, die an das Stützgehäuse (21) befestigt ist.

9. Gehrungssäge nach Anspruch 1, wobei die Gehrungswinkelanschlaganordnung (40) weiter eine zweite Platte (43) umfasst, die auf dem Tisch (11) angeordnet ist, wobei die zweite Platte eine zweite Kerbe (43N) aufweist, um das Element (41, 48) aufzunehmen.

## Revendications

1. Scie à onglet (100) comprenant :
un ensemble base (10) ;
une table rotative (11) disposée de façon rotative sur l'ensemble base ;
un ensemble scie (20) supporté de façon rotative par la table (11), l'ensemble scie comprenant un logement de support (21) relié de façon rotative à la table, un bras pivotant (23) supporté par le logement de support, un moteur (24) supporté par le bras et une lame (25) entraînée par le moteur ; et
un ensemble arrêt de biseau (40) pour fixer la position de rotation de l'ensemble scie par rapport à la table, l'ensemble arrêt de biseau comprenant une poignée (42K, 46H) disposée sur le logement de support, un élément (41, 48) pouvant être déplacé par la poignée, **caractérisée par** une première plaque (43) disposée sur la table, la première plaque possédant une première encoche (43N) pour recevoir l'élément, dans laquelle l'élément peut être déplacé par la poignée entre une première position entrant en prise avec la première encoche, et une seconde position n'entrant pas en prise avec la première encoche.

2. Scie à onglet selon la revendication 1, dans laquelle la première plaque (43) est réglable par rapport à la table (11).

3. Scie à onglet selon la revendication 1, dans laquelle l'ensemble arrêt de biseau (40) comprend en outre un ressort (41 S, 44) pour solliciter l'élément (41) vers la première position.

4. Scie à onglet selon la revendication 1, dans laquelle la poignée (42K) est disposée par-dessus le logement de support (21).

5. Scie à onglet selon la revendication 1, dans laquelle l'ensemble arrêt de biseau (40) comprend en outre une tige (42) qui est reliée à la poignée (42K), dans laquelle la tige entre en contact avec et déplace l'élément (41) vers la seconde position lorsque la poignée est déplacée.

6. Scie à onglet selon la revendication 1, dans laquelle l'ensemble arrêt de biseau (40) comprend en outre une came (42CS, 46C) qui est reliée à la poignée (42K, 46H), dans laquelle la came entre en contact avec et déplace l'élément (41, 48) vers la seconde position lorsque la poignée est déplacée.

7. Scie à onglet selon la revendication 1, dans laquelle l'ensemble arrêt de biseau (40) comprend en outre une liaison (49) qui est reliée à la poignée (42K), dans laquelle la liaison entre en contact avec et déplace l'élément (48) vers la seconde position lorsque la poignée est déplacée.

8. Scie à onglet selon la revendication 1, dans laquelle l'élément (41) est fixé à un ressort (41 S, 44), qui est fixé au logement de support (21).

9. Scie à onglet selon la revendication 1, dans laquelle l'ensemble arrêt de biseau (40) comprend en outre une seconde plaque (43) disposée sur la table (11), la seconde plaque possédant une seconde encoche (43N) pour recevoir l'élément (41, 48).
